# EUROPEAN PATENT APPLICATION

(11) **EP 2 705 934 A2**
(43) Date of publication of application: **12.03.2014**
(21) Application number: 13466017.4
(22) Date of filing: 04.09.2013
(51) Int. Cl.: B25J 9/04, B25J 11/00, B25J 13/00, B25J 17/02, B25J 18/00

(54) **A method and a device for change of rigidity of a serial or parallel basic movable mechanism, especially of industrial robots and machining machines**

(30) Priority: 10.09.2012 CZ 20120621
(71) Applicant: CVUT V Praze, Fakulta Strojní, 166 07 Praha 6 (CZ)
(72) Inventor: Valásek, Michael, 14300 Praha 4 (CZ); Bauma, Václav, 15200 Praha 5 (CZ); Sika, Zbynek, 46000 Praha 6 (CZ); Svatos, Petr, 25167 Py?ely (CZ)
(74) Representative: Novotny, Karel

(57) **Abstract**

The invention concerns a method and a device for change of rigidity of a serial or parallel basic movable mechanism, especially industrial robots and machining machines, where the basic movable mechanism is fixed to the frame and the basis of the method is in creation of at least one auxiliary movable mechanism fixed to the frame and equipped with an auxiliary end effector, the basic end effector and the auxiliary end effector are connected to each other using at least one connecting element, the position of the tool fixed to the basic end effector is determined and according to the deviation of the position of the tool fixed to the basic end effector from the required position the action of force, which is needed to act on the basic end effector of the basic movable mechanism with the help of the connecting element for achievement of the required position of the tool, is determined.

The subject matter of the device is in the fact that the basic end effector (2) or the arm (8) of the basic movable mechanism (1) is connected using at least one connecting element (6) to at least one auxiliary end effector (4) of the serial or the parallel auxiliary movable mechanism (4) connected to the frame (16).

## Description

### Technical Field

The invention concerns a method and a device for change of rigidity of a serial or parallel basic movable mechanism, especially of industrial robots and machining machines, with the basic movable mechanism attached to a frame and carrying a tool attached to a basic end effector.

### State-of-the-art

Rigidity is one of the most important construction requirements. Rigidity can be increased in a passive way by various structural modifications with the help of vast range of optimizations.
Absorption of vibration or deformation can be mostly influenced directly by an active mechatronic solution, rigidity can be influenced only in an indirect way. Active elements are placed into the structure of the construction, mostly piezoelectric actuators, but these can be electrodynamic, magnetostrictive, hydraulic, magnetorheologic or ionic polymers as well. Active elements can be placed into construction elements, bars of lattice works, on a surface of beams or shells as piezoelectric actuator patches or solid active layers, into actuators of ropes that connect parts of the construction or implemented as fixing elements of additional substances.
Mechanisms of controlled absorption of vibrations are based on additional absorption, vibration isolation, vibration compensation or vibration absorption. Furthermore we differentiate between active (with possible energy supply) and semi-active (with energy dissipation only) control. Applications are widespread from wings of airplanes, constructions of antennas, radars and telescopes and boring bars to constructions of rope bridges.
In general, structures are of infinite number of degrees of freedom and so structures with active control are in danger of occurrence of the effect of destabilization by energy overflow - so called spillover. It has been proven that this danger is not a threat during collocated control. In most cases rigidity is needed in a place of the construction that cannot be directly, and in the shortest way, connected to the frame, supported from the frame, to increase rigidity.
In most cases, present control mechanisms act on relative coordinates of the construction, possibly by means of an active rope from the frame. An open issue is still whether the analogical effect from the frame can be lead even to inaccessible parts of the construction and whether the rigidity of the constructions can be influenced directly using feedback control.
A method for change of rigidity of static constructions was proposed (PV 2006-123), the principle of which is in the fact that next to the basic load bearing structure an additional construction to that basic load bearing structure is created, both the constructions are connected to each other using at least one connecting element with controlled properties, positions of the connecting points of the connecting element towards the frame are determined and according to the deformation of the basic load bearing structure that is determined on the basis of measurement of change of the position of the connecting points of the connecting element towards the frame the needed action of force, which acts on the basic load bearing structure with the help of the connecting element for changing its rigidity, is determined. The basic problem is that this solution can be applied only to static constructions with the need of additional drive. This solution can be utilized for increase of rigidity of one single arm of a movable mechanism, but cannot be utilized for increase of rigidity of movable mechanisms with movable joints, linear guides or ropes.
The aim of this invention is a method and a device for change of rigidity of movable mechanisms, especially of industrial robots and machining machines, the rigidity of which is increased or adjusted, or decreased, especially in a tool on the end effector with or without utilization of an additional drive.

### Subject Matter of the Invention

The subject matter of a method of change of rigidity of a serial or parallel basic movable mechanism according to the invention is in the fact that at least one auxiliary movable mechanism attached to the frame and equipped with an auxiliary end effector is created. The basic end effector and the auxiliary end effector are connected to each other using at least one connecting element, a position of the tool attached to the basic end effector is determined and according to the observed deviation of the position of the tool attached to the basic end effector from the position required the needed action of force is determined, which acts on the basic end effector of the basic movable mechanism by means of the connecting element to achieve the required position of the tool.
To determine the deviation of the position of the tool attached to the basic end effector the position of drives of the basic and/or auxiliary movable mechanism and/or movement in joints of the basic and/or auxiliary movable mechanism and/or deformations of arms of the basic and/or auxiliary movable mechanism and/or deformation of the connecting element are measured, and/or the position of the connecting points of the connecting element on the basic and/or auxiliary end effector towards the basic and/or auxiliary end effector and/or towards the frame is measured, and/or the position of the tool attached to the basic end effector towards the frame is measured. The subject matter of the device for change of rigidity of a serial or parallel basic movable mechanism connected to a frame and carrying a tool attached to a basic end effector according to the invention is in the fact that the basic end effector or the arm of the basic movable mechanism is connected using at least one connecting element to at least one auxiliary end effector of the serial or parallel auxiliary movable mechanism attached to the frame.
The basic movable mechanism and/or the auxiliary movable mechanism are of serial and/or of parallel type with solid and/or inflated and/or deflated and/or rope arms.
The connecting element is attached to the basic end effector and/or to an auxiliary end effector using a rotational (spherical) joint and/or in a sliding way and/or in a fixed way and/or using a flexible joint.
The device is equipped with sensors of positions of the connecting points of the connecting element and/or with sensors of movement in joints and/or with sensors of movement in linear guides and/or with sensors of movement in trolleys and/or with sensors of deformation of arms and/or with sensors of deformation of ropes and/or with sensors of deformation of the connecting element and/or with sensors of position of the tool.
The basic movable mechanism and/or an auxiliary movable mechanism have more drives than degrees of freedom.
The connecting element can be possibly equipped with an actuator of controlled power source and/or of controlled damping.
The auxiliary end effector and/or a part of the auxiliary movable mechanism can be possibly passed collaterally to the basic end effector and/or to a part of the basic movable mechanism.
The connecting element can be fixed and/or inflated and/or deflated and/or roped.
The arms of the basic movable mechanism and/or the auxiliary movable mechanism can be represented by ropes connected to drive trolleys and/or by sliding drive trolleys on the frame and/or by drive trolleys on the auxiliary movable mechanism.
The ropes of the basic movable mechanism and/or the auxiliary movable mechanism can pass over trolleys on the auxiliary movable mechanism.
The ropes of the basic movable mechanism and/or the auxiliary movable mechanism can possibly pass over trolleys on the connecting elements of the auxiliary movable mechanisms and can be advantageously attached to the basic movable mechanism and/or the auxiliary movable mechanism in a tangent or in a counter way.
Advantageously, the ropes of the basic movable mechanism and/or the auxiliary movable mechanism are passing outside the working area of the device.
A tool on the basic movable mechanism can be possibly movable towards the basic end effector and can be connected to the connecting element.
The advantage of the method and the device for change of rigidity of movable mechanisms is that the change of rigidity of the movable mechanisms is possible for arbitrary mechanisms, especially for industrial robots and machining machines, with a serial and/or parallel kinematic structure, with fixed and/or inflated and/or deflated and/or roped arms.
Another advantage is that the solution is based on collocated control, so that it is not inclinable to occurrence of the destabilization effect of spillover. A great advantage is that the values of the forces needed in the drives of the auxiliary movable mechanisms and in the actuators of the connecting elements are of approximately the same value as disturbing forces acting on the tool of the basic movable mechanism. The last advantage is that the change of rigidity using a feedback control enables its change in a large scale, e.g. for preventing deviations caused due to external forces when positioning the tool. The method and the device for change of rigidity of movable mechanisms further enable creation of completely new rope mechanisms with large working area into which the ropes do not interfere.

### Review of the Figures in the Drawings

In the enclosed figures there are schematic depictions of the device for change of rigidity of movable mechanisms according to the invention, where individual alternatives are schematically depicted in Fig. 1 to Fig. 44, Fig. 45 and Fig. 48 and in three-dimensional embodiments in Fig. 45 and in Fig. 47

### Examples of Embodiments of the Invention

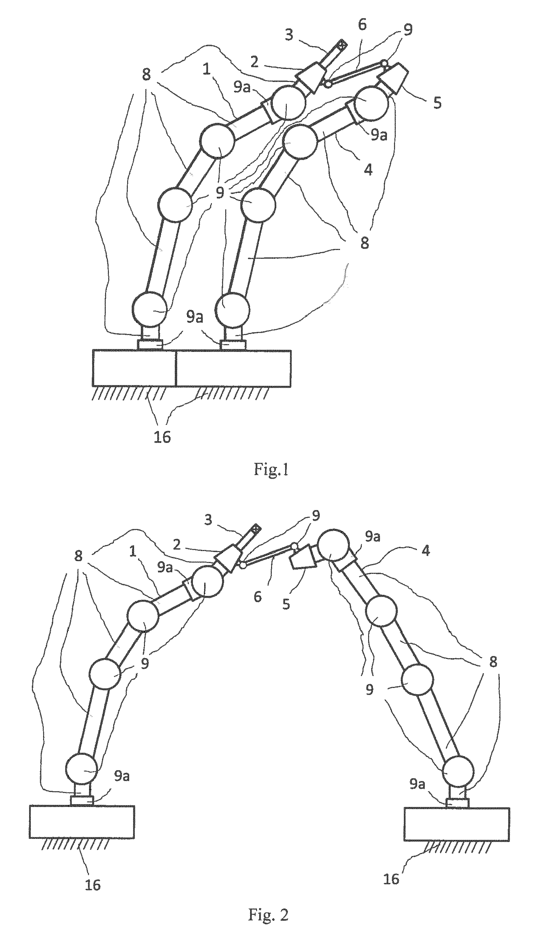

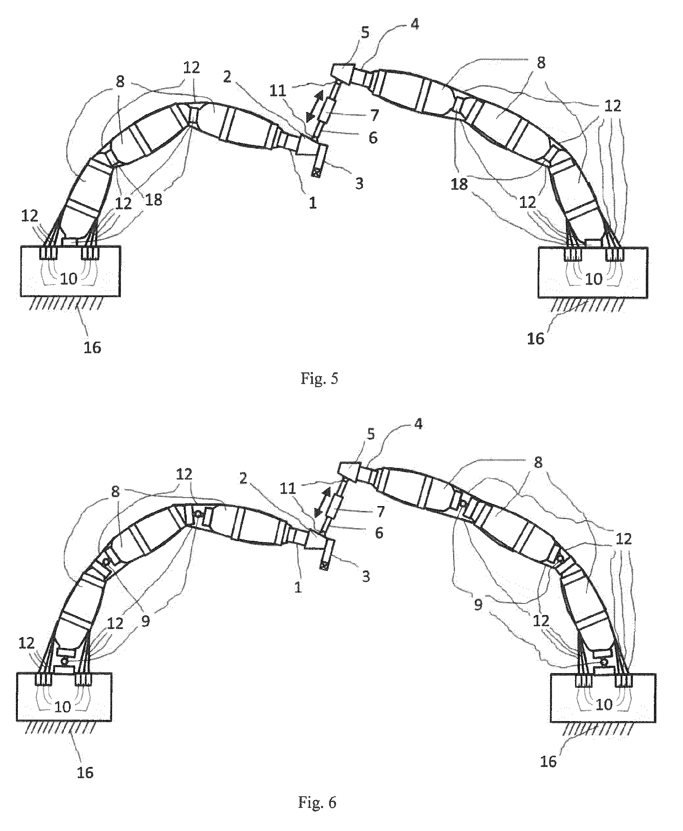

In Fig. 1 there is a schematic depiction of an embodiment of the device according to the invention, where parallel to the basic movable mechanism 1 carrying the tool 3 attached to the basic end effector 2 there is an auxiliary movable mechanism 4 with an auxiliary end effector 5 created. There is an industrial robot with a serial kinematic structure, which is created with arms 8 connected with rotational joints 9, 9a and attached to the frame 16, depicted here. Both the end effectors 2, 5 are connected to each other using the connecting element 6 which is connected to the basic end effector 2 and to the auxiliary end effector 5 using the rotational joints 9. The axes of rotation of the rotational joints 9a are, in the plane of projection in the figure, perpendicular to the axes of rotation of the joints 9. This is a projection of a three-dimensional industrial robot with 6 degrees of freedom. Here the auxiliary movable mechanism 4 is also created using an industrial robot with a serial kinematic structure, which is created by arms 8 connected using rotational joints 9, 9a and attached to the frame 16. Drives of both the robots are placed in the rotational joints 9 and 9a. In Fig. 1 there is a projection of the three-dimensional industrial robots according to the invention depicted. If there were no rotational joints 9a, these would be planar industrial robots with a kinematic redundancy. But in this case it is considered a three-dimensional subject. In this embodiment not only the end effectors 2 and 5, but also all the arms 8 are passing collaterally (approximately parallel). That is the reason why more connecting elements 6 can be used not only between the end effectors 2 and 5, but also between the arms 8.
Using the sensors on the drives of the basic 1 and/or the auxiliary 4 movable mechanism (robot), and/or using the sensors of total rotation (and/or sensors of total linear move in the linear guides 10, if they are applied - e.g. Fig. 5 to 9, 35) of the arms 8 of the basic 1 and/or the auxiliary 4 movable mechanism, and/or using the sensors of deformation in the rotational joints 9, 9a (and/or sensors of deformation in the linear guides 10, if they are applied - e.g. Fig. 5 to 9, 35) of the basic 1 and/or the auxiliary 4 movable mechanism, and/or using the sensors of deformation of the arms 8 of the basic 1 and/or the auxiliary 4 movable mechanism, and/or using the sensors of deformation of the connecting element 6 and/or by direct measurement determination of the position of the tool 3 attached to the basic end effector 2 and of the position of the connecting points of the connecting element 6 on the auxiliary end effector 5 and on the basic end effector 2 towards the basic and/or auxiliary end effector and/or towards the frame is carried out. According to the deviation of the position of the tool 3 attached to the basic end effector 2 the needed action of force, which acts on the basic end effector 2 of the basic movable mechanism 1 by means of the connecting element 6, can be determined. This needed action of force is then in the embodiment in Fig. 1 realized by movement of the auxiliary end effector 5 with the help of movement of the drives of the auxiliary movable mechanism 4. The auxiliary movable mechanism 4 is driven so that it supports and acts through the connecting element 6 on the end effector 2 and the tool 3 to achieve the required position of the tool 3. Advantageously, the position of the auxiliary movable mechanism 4 is driven so that the connecting element 6 is oriented in the direction of the final acting force.
However, this embodiment according to the invention can be utilized as well in other ways of changing rigidity of the basic movable mechanism 1, e.g. increasing damping, variable adaptation of rigidity for contact with environment etc.

In Fig. 2 there is an alternative embodiment to Fig. 1, where only the end effectors 2 and 5 are passing collaterally (in parallel).

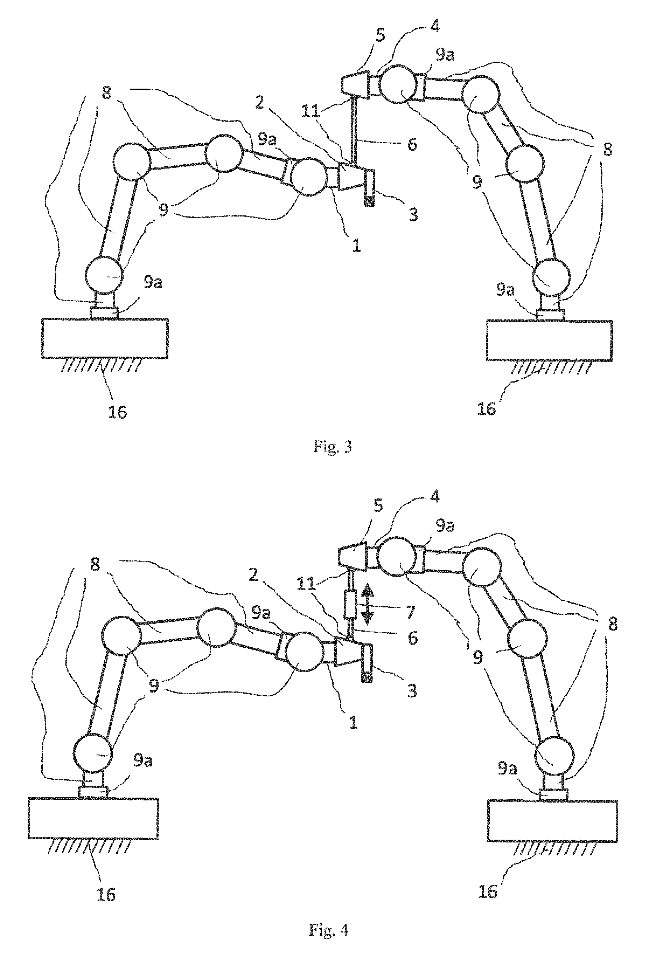

In Fig. 3 there is an alternative embodiment to Fig. 2, where the connecting element 6 is attached to the basic end effector 2 and to the auxiliary end effector 5 by a fixed connection 11.

In Fig. 4 there is an alternative embodiment to Fig. 3, where the connecting element 6 is equipped with the actuator 7. Control can be performed the same way as on the embodiment in Fig. 1, but for development of the needed action of force, which acts on the basic end effector 2 of the basic movable mechanism 1 using the connecting element 6 to achieve the required position of the tool 3, the force of the actuator 7 is utilized as well. The advantage is that the action of force of the actuator 7 is collocated with the deviation in the position of the tool 3. This embodiment can be also utilized for a changed algorithm of control, when the auxiliary end effector 5 is stabilized in the required position and the deviation in the position of the tool 3 is compensated by the action of force in the actuator 7 of the connecting element 6. The auxiliary end effector 5 represents an elastic point in space by which the actuator 7 is supported for realization of mechatronic rigidity.

In Fig. 5 there is an alternative embodiment to Fig. 4, where the basic movable mechanism 1 as well as the auxiliary movable mechanism 4 are created by inflated and/or deflated arms 8, which are connected by the flexible joints 18 and driven by the ropes 12 controlled by the linear guides 10 with drives on the frame 16. This can be a planar as well as a three-dimensional embodiment of the movable mechanism. The flexible joint 18 is actually the fixed connection 11 the rigidity of which is such that the action of force causes its deformations which cannot be neglected. However, extent of a movement needs not to be small. Its advantage is realization of joints with no clearances and with minimal friction. The inflated arm can be for example a membrane reinforced with elements resistant to buckling the cavity of which is filled with air with overpressure. The deflated arm can be for example a membrane reinforced with elements resistant to buckling the cavity of which is filled with balls and with air with underpressure. The basic end effector 2 carrying the tool 3 is connected using the connecting element 6 equipped with the actuator 7 to the auxiliary end effector 5 with fixed connections 11. Control is performed according to the algorithms mentioned above whereas here the sensors of movement and/or deformations in the linear guides 10, and/or the sensors of movement and/or deformations in the flexible joint 18 can be utilized.

In Fig. 6 there is an alternative embodiment to Fig. 5, where the inflated or the deflated arms 8 are connected using the usual rotational joints 9. In this case the roped drive 12 is utilized again but usage of typical drives in the rotational joints 9 is possible as well. This can be a planar as well as a three-dimensional embodiment of the movable mechanism, too.

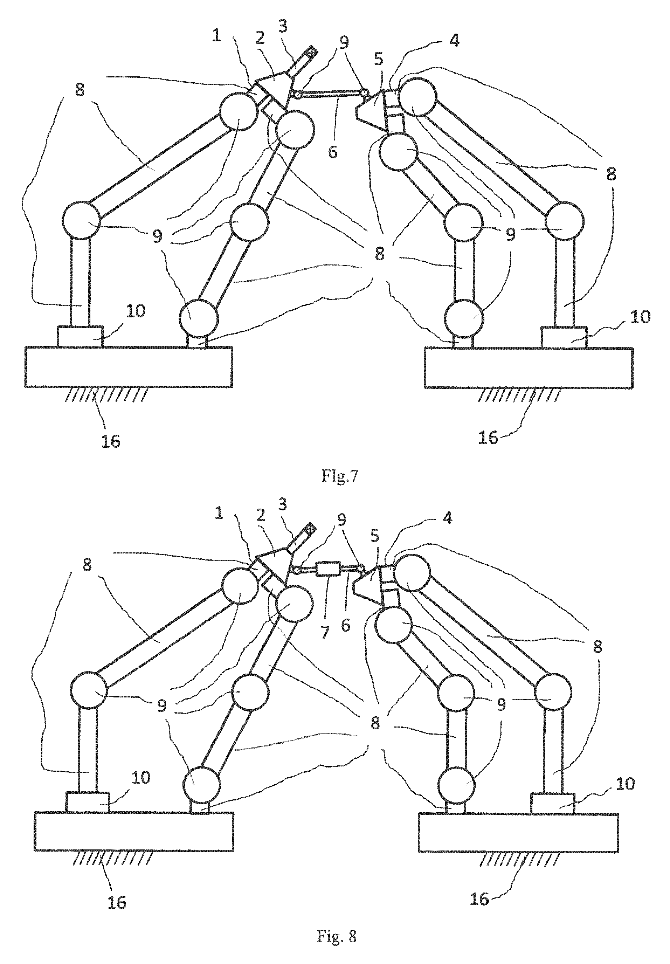

In Fig. 7 there is an alternative embodiment to Fig. 2, where the basic movable mechanism 1 as well as the auxiliary movable mechanism 4 is created by industrial robots with a parallel kinematic structure. The platform forming the basic end effector 2 is hung on the arms 8 which are connected using the rotational joints 9 and attached to the frame 16 by the arms 8 using joints and/or in a sliding way, by the linear guides 10 equipped with drives. The basic end effector 2 carrying the tool 3 is connected using the connecting element 6 to the auxiliary end effector 5 using the rotational (spherical) joints 9. This can be a planar as well as a three-dimensional embodiment of the movable mechanism.

In Fig. 8 there is an alternative embodiment to Fig. 7, where the connecting element 6 is equipped with the actuator 7 of the connecting element 6.

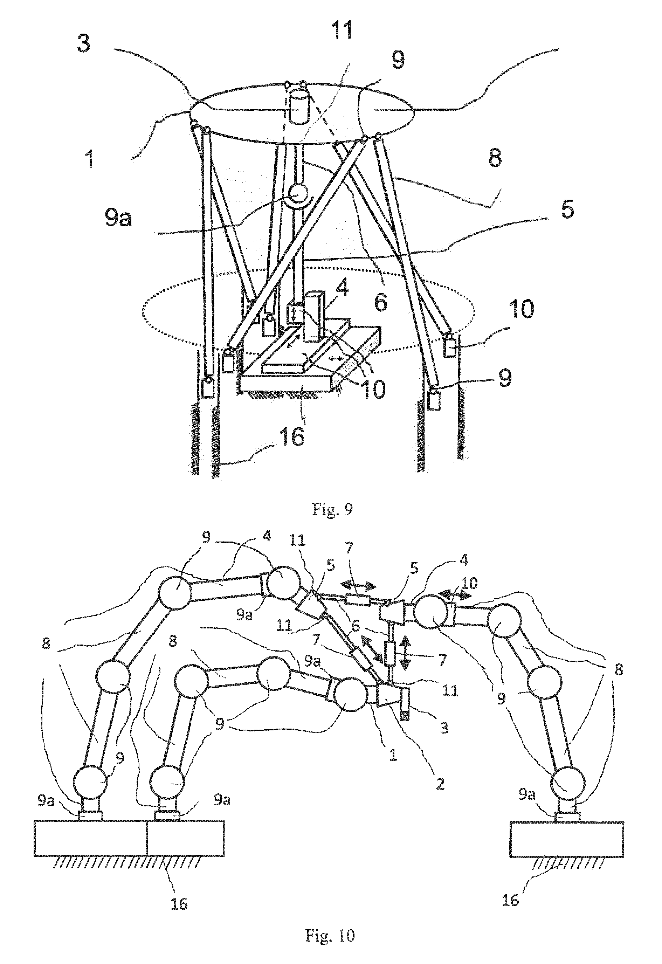

In Fig. 9 there is another embodiment of the device according to the invention, in this case it is a machining machine with a parallel kinematic structure formed by a platform and arms, where the end effector 2 is represented by the platform which is hung on 6 arms 8 connected using the rotational joints 9 to the platform on one side and on the other side to carts on the linear guides 10 attached to the frame 16, whereas drives of the carts are in the linear guides. Collaterally to the basic movable mechanism 1 carrying the tool 3 attached to the basic end effector, in this case the platform, there is an auxiliary movable mechanism 4 created. The connecting element 6 is connected to the basic end effector using a fixed connection 11 and to the auxiliary end effector 5 using the rotational (spherical) joint 9a. The auxiliary movable mechanism 4 connected to the frame 16 is, in this case, formed by three serial connected carts in the linear guides 10 with drives. The position of the rotational (spherical) joint 9a can be moved linearly in three Cartesian coordinate axes so that the position of the support of the spherical joint of the parallel kinematic structure HexaSphere (described with a fixed position of the spherical joint 9a in the CZ 302911 document) can be changed. This is extra advantageous, because a machining machine of five degrees of freedom in space with large mobility and with properties of a parallel kinematic structure can be created. In this case more drives (nine) than degrees of freedom (six) are used. The connecting element 6 can be possibly equipped with the actuator 7. Control is performed according to the algorithms mentioned above.

In Fig. 10 there is an embodiment of the device according to the invention where more, two in this case, auxiliary movable mechanisms 4 with the auxiliary end effectors 5 are used. These are connected to each other and to the auxiliary end effector 2 carrying the tool 3 using the connecting elements 6 equipped with the actuators 7 of the connecting element 6. In this embodiment three connecting elements 6 are used, one of them connects the auxiliary end effectors 5 to each other. In Fig. 10 there is a planar version or a projection of the tree-dimensional version. In the planar version it is advantageous to utilize a triangle of the connecting elements 6, in the tree-dimensional version it is advantageous to utilize a tetrahedron created by 6 connecting elements 6. Control is performed according to the algorithms mentioned above.

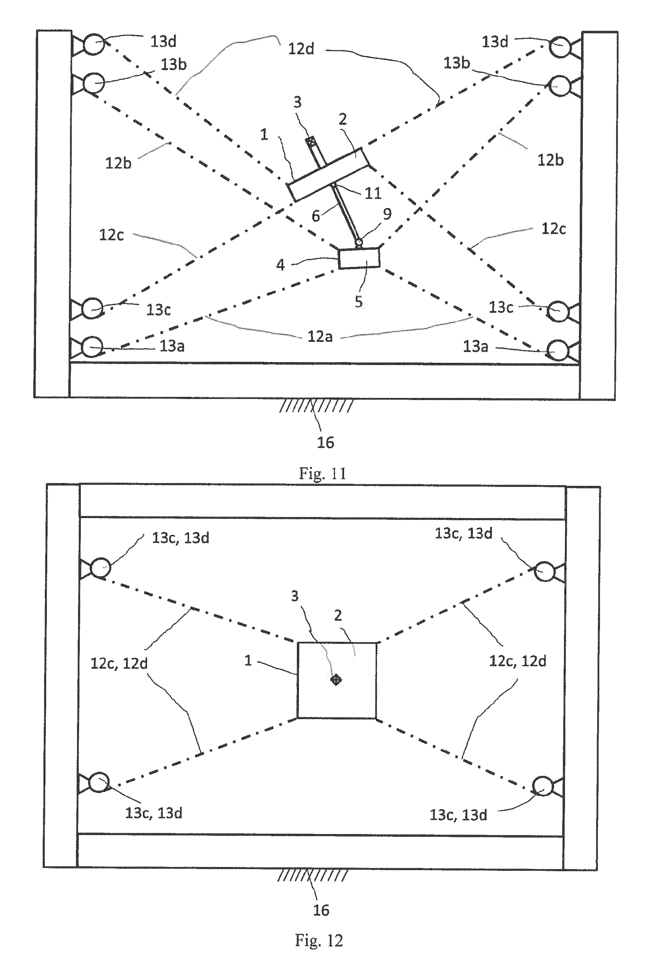

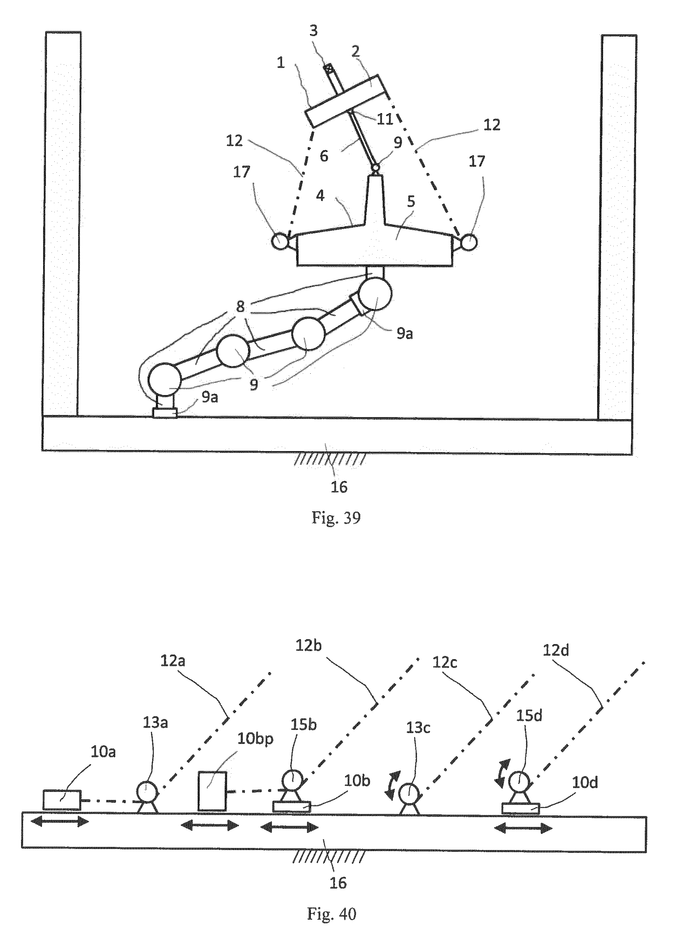

In Fig. 11 there is an example of an embodiment according to the invention, where the basic movable mechanism 1 as well as the auxiliary movable mechanism 4 is a roped mechanism. Instead of the arms 8 the ropes 12a-d attached using the trolleys 13a-d with drives to the frame 16 on one side and attached directly to the basic end effector 2 and to the auxiliary end effector on the other side are used. Therefore, the basic movable mechanism 1 is formed by the basic end effector 2 carrying the tool 3 and the ropes 12c-d with the trolleys 13c-d on the frame 16. Therefore, the auxiliary movable mechanism 4 is formed by the basic end effector 5 and the ropes 12a-b with the trolleys 13a-b on the frame 16. Both the end effectors 2 and 5 are connected using the connecting element 6. The connecting element 6 is connected to the basic end effector 2 using a fixed connection 11 and to the auxiliary end effector 5 using the rotational (spherical) joint 9. The rotational joint 9 can have a different number of degrees of freedom. This can be a rotational joint with one degree of freedom realized, for example, by a rotor in bearings or a rotational (spherical) joint with two degrees of freedom realized, for example, by a cardan joint or a rotational (spherical) joint with three degrees of freedom realized, for example, by a ball joint or by a complete cardan suspension. Schematic depiction in Fig. 11 can represent planar rope mechanisms, as well as a projection of three-dimensional rope mechanisms.
Number of the ropes 12 with the drives in the trolleys 13 for fixation of the basic movable mechanism 1 and for fixation of the auxiliary movable mechanism 4 must be larger than number of degrees of freedom of those mechanisms, so that only tension is realized in all the ropes. This is a variant of an antibacklash control of redundant number of drives of the mechanism with a parallel kinematic structure. This antibacklash control must be realized as the basic control of movement of the individual rope mechanisms and, furthermore, the described control utilizes the antibacklash control as a tool for change of rigidity of the basic movable mechanism and for achievement of the required position of the tool with the help of the action of external forces.
For a subject in a plane controlled as a point (with no orientation) 3 ropes are sufficient, for a body in a plane controlled including orientation, 4 ropes are sufficient. The connections of the ropes to the frame using the trolleys form a polygon that can be the highest working area of the rope mechanism. That is also the reason why with more ropes a larger working area can be created, but with more ropes a problem can occur - the ropes can collide with one another. Some part of the ropes can be replaced with a member created by a beam resistant to buckling. Then, advantageously, the rest of the ropes can be passed only in one direction and a working area from one side clear can be achieved. This will be seen on other embodiments; in principle the auxiliary movable mechanism 4 with the connecting element 6 represents such a member created by a beam resistant to buckling.
Analogically, for a subject in space controlled as a point (with no orientation) 6 ropes are sufficient, for a body in space controlled including orientation, 7 ropes are sufficient. The connections of the ropes to the frame using the trolleys create a polyhedron that can be the highest working area of the rope mechanism. That is also the reason why with more ropes a larger working area can be created, and so 8 ropes from the corners of the block are usually used, but with more ropes a problem can occur, the ropes can collide with one another. Even in space some part of the ropes can be replaced with a member created by a beam resistant to buckling with the advantage of achievement of a working area clear of the ropes from one side. Even in space an auxiliary movable mechanism 4 with the connecting element 6 represents such a member created by a beam resistant to buckling.
The rule, that number of the ropes must be larger than number of degrees of freedom of the moving body is applicable for the whole connection of the basic 1 and the auxiliary movable mechanism 4. So in a plane only 5 ropes would be sufficient for the device in Fig. 11, which has 4 degrees of freedom; in space the device in Fig. 11 with the rotational spherical joint 9 has 9 degrees of freedom in total and only 10 ropes would be sufficient. But this would not be advantageous, because the possibility of the action of force from the auxiliary 4 to the basic 1 movable mechanism using the connecting element 6 would not be fully utilized. For this reason it is advantageous when the basic 1 as well as the auxiliary 4 movable mechanism are individually controlled, without connection using the connecting element 6, by ropes in a number larger than the number of their degrees of freedom. That is the reason why it is advantageous to hang up the basic 1 as well as the auxiliary 4 movable mechanism on 4 ropes in a plane and on 8 ropes in space. In total there are 8 ropes utilized in a plane (e.g. 12a-d in Fig. 11) and 16 ropes in space (e.g. twice the ropes 12a-d depicted in the projections in Fig. 11-13).
Further, the rotational joint 9 can have a different number of degrees of freedom in space. If the rotational joint 9 is a joint with one degree of freedom, then the three-dimensional device in Fig. 11 has seven degrees of freedom and utilization of 8 ropes is sufficient. If the rotational joint 9 is a joint with two degrees of freedom (e.g. a cardan joint), then the three-dimensional device in Fig. 11 has eight degrees of freedom and utilization of 9 ropes is sufficient. If the rotational joint 9 is a spherical joint with three degrees of freedom (e.g. a ball joint), then the three-dimensional device in Fig. 11 has nine degrees of freedom and utilization of 10 ropes is sufficient. But when using this minimal number of ropes, the resulting mechanical properties are not good. That is the reason why it is necessary to use at least one rope more (in this example 9 or 10 or 11 ropes according to the resulting number of degrees of freedom of the device), but the best solution is to increase more the redundancy of the number of ropes representing in fact the number of redundant drives. Measurement on the rope mechanisms is carried out by measurement of the positions on the drives of the ropes (see Fig. 40), on the rotations of the trolleys 13 and/or 14 and/or 15 and/or 17, by measurement of the force acting in the ropes 12 and the deformations of the ropes 12, deformations of the end effectors 2 and/or 5, deformations of the connecting elements 6, or by direct measurement of the position of the tool 3 attached to the basic end effector 2 and/or the position of the connecting points of the connecting element 6 on the auxiliary end effector 5 and on the basic end effector 2. Measurement is used for control of the auxiliary movable mechanism 4 (and the actuator 7, if it is used) so that it supports the end effector 2 and the tool 3 and acts on them through the connecting element 6 for achievement of the required position of the tool 3 as in the previous embodiments and/or in the basic embodiment in Fig. 1.

A possible positioning of the ropes 12c-d and the trolleys 13c-d for the basic movable mechanism 1 is depicted in Fig. 12 as the top view, which is perpendicular to the projection in Fig. 11.

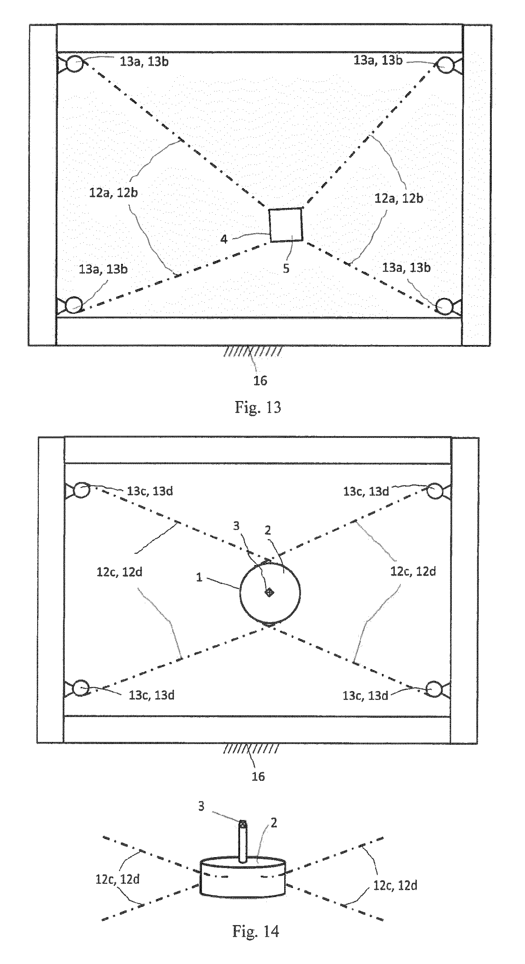

A possible positioning of the ropes 12a-b and the trolleys 13a-b for the auxiliary movable mechanism 4 is depicted in Fig. 13 as the top view, which is perpendicular to the projection in Fig. 11. A constructional problem is usually collision of the ropes. The danger can be advantageously influenced by relative ratio of the size of the basic end effector 2 and the auxiliary end effectors 5, which can be of larger number. This relative ratio can be, for example, ratio of the sizes of the edges in Fig. 12 and Fig. 13.

It is advantageous to fix the ropes 12 in the trolleys 13 and directly on the end effector 2 and/or 5 so that the connection points are in different planes. This is depicted in Fig. 11 for the ropes 12a and 12b of the auxiliary end effector 5 and for the ropes 12c and 12d of the basic end effector 2.

Another advantageous arrangement of connections of the ropes to the basic end effector 2 is in Fig. 14, where the ropes 12c-d are attached to the basic end effector 2 in a tangent way and at least one of the ropes 12c-d act on the basic end effector 2 in an upstream direction (with a reverse moment) than the others. This is why the basic end effector 2 is of an oval shape. It is advantageous that the same number of ropes acts in one direction and the same number of ropes acts in the opposite direction. This arrangement ensures equal and maximized moment of acting of the ropes 12c-d on the basic end effector 2, which is mainly independent on the position of the end effector in the working area. It is possible to use more ropes, for example 6 or 8, especially in space. In the bottom part of the Fig. 14 there is a depiction of fixation of the ropes in a three-dimensional view. Advantageously, the ropes are positioned in more planes and they are partially wound on the oval shape of the end effector 2. Counter-rotating arrangement and acting of the ropes always in the same plane can be seen in the bottom part of Fig. 14 (there is a depiction of utilization of 4 ropes in two parallel planes there). Analogical alignment is possible for the auxiliary end effector 5.

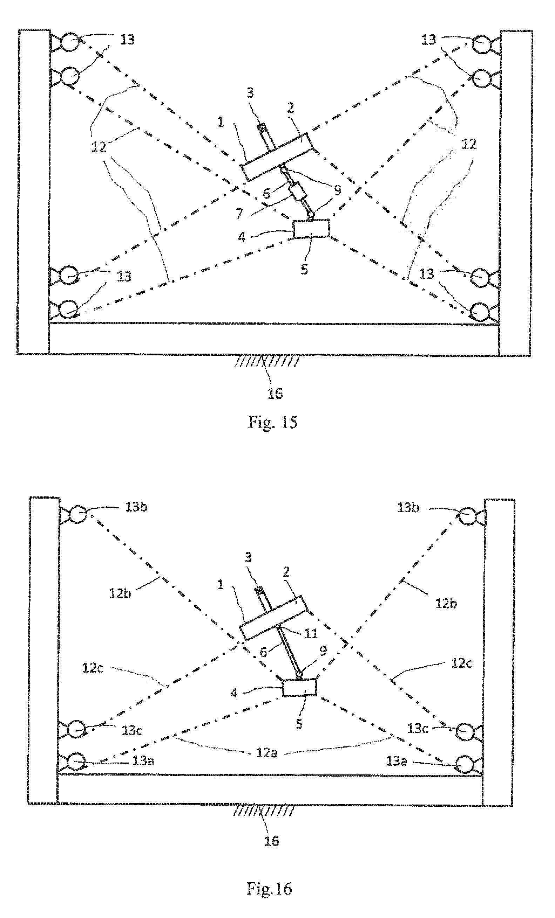

In Fig. 15 there is an alternative solution to the embodiment depicted in Fig. 11, where the connecting element 6 is connected to the basic 2 as well as to the auxiliary end effector 5 using the rotational (spherical) joints 9 and is equipped with the actuator 7 of the connecting element 6. The connecting element 6 is to the basic end effector 2 as well as to the auxiliary end effector 5 connected using the rotational (spherical) joint 9. The actuator 7 increases rigidity and accuracy of positioning of the tool 3 on the basic end effector 2. Control is performed according to the algorithms mentioned above. Presence of the actuator 7 can be also utilized for a changed algorithm of control, when the auxiliary end effector 5 is stabilized in the required position and the deviation in the position of the tool 3 is compensated by the action of force in the actuator 7 of the connecting element 6. The auxiliary end effector 5 represents an elastic point in space with which the actuator 7 is supported for realization of mechatronic rigidity. This can be a planar as well as a three-dimensional embodiment of the movable mechanism.

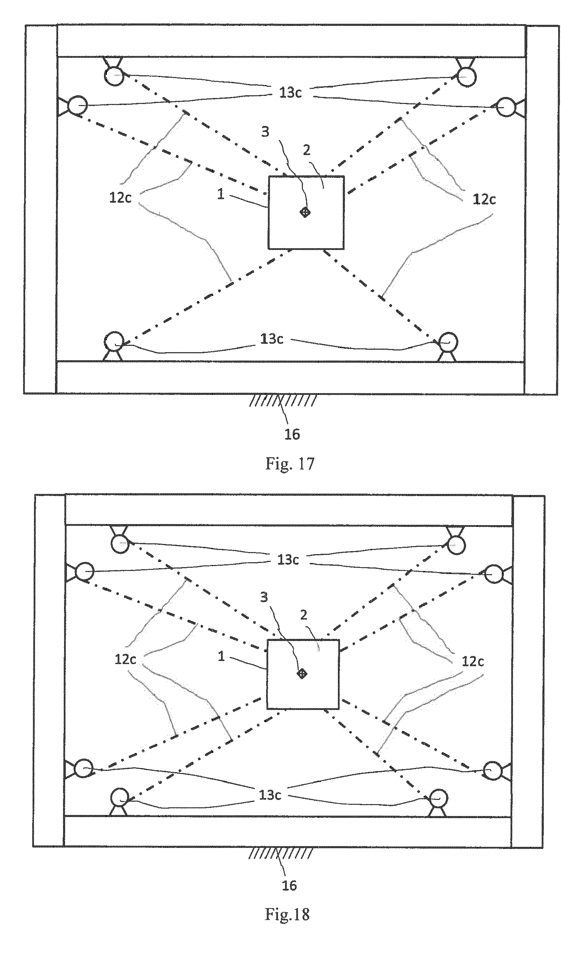

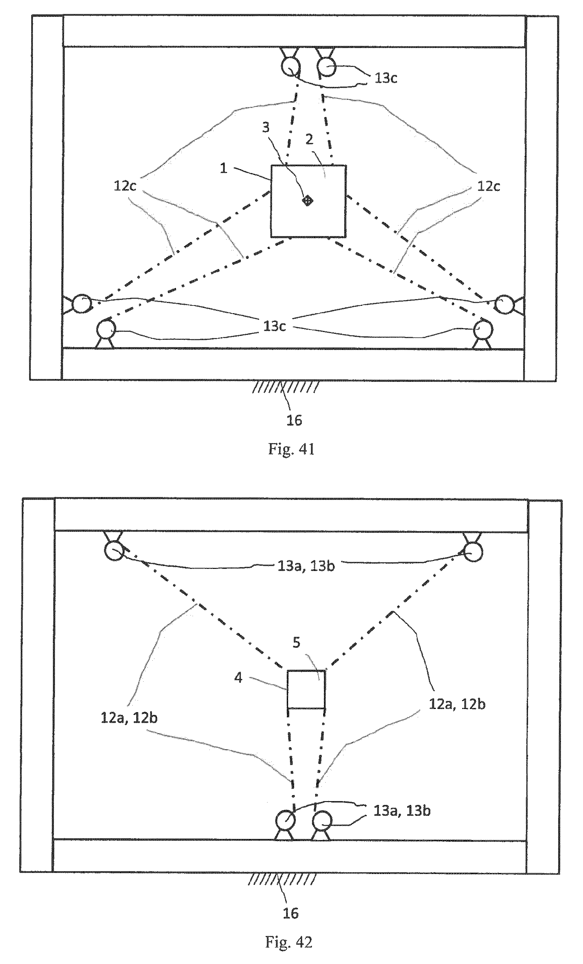

In Fig. 16 there is an alternative solution to the embodiment depicted in Fig. 11, where the connecting element 6 represents a member that is created by a beam resistant to buckling for the possibility to omit the ropes 12d and to pass only the ropes 12c from the basic end effector 2 in one direction - downwards and/or to reduce number of the ropes passing from the basic end effector 2. This will enter the possibility of positioning all the ropes 12 outside the working area of the tool 3 in the other embodiments. A possible arrangement of the ropes 12c for a three-dimensional embodiment is depicted in Fig. 17 or in Fig. 18 or in Fig. 41.

In Fig. 17 6 ropes 12c are used. Utilization of 6 ropes 12c instead of 3 ropes needed (7 or 8 ropes 12a-b and 3 ropes 12c) enables achievement of large mobility of orientation analogical to the HexaSphere (described with a fixed position of the spherical joint 9 in the CZ 302911 document, HexaSphere reached the orientation of +- 100 degrees).

In Fig. 18 8 ropes 12c are used for higher effect on rigidity, dexterity and accuracy. Examples of arrangements of the ropes of the auxiliary movable mechanism 4 are in Fig. 13 or in Fig. 42.

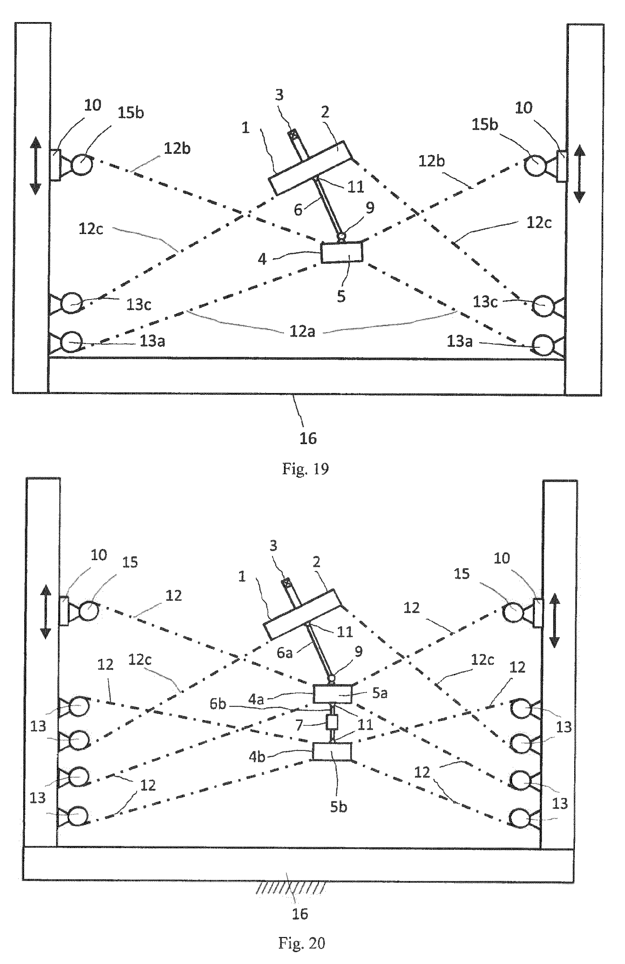

In Fig. 19 there is a schematic depiction of an alternative embodiment to Fig. 16, where the connecting element 6 is fully used as a member created by a beam resistant to buckling for the possibility to pass all the ropes 12 outside the working area of the tool 3. This is achieved so, that the trolleys 13b with attached connection to the frame in Fig. 16 are, at this embodiment, replaced with sliding trolleys 15b in the linear guide 10 on the frame 16. This enables that the ropes 12b do not interfere into the working area of the tool 3 and in principle are positioned under the basic end effector 2 together with the trolleys 15b. The trolleys 15b on the linear guide 10 on the frame 16 are equipped both with a drive for winding the ropes 12b and with a drive for linear movement along the frame 16 (alternatives of the embodiment are to be seen in Fig. 40). This enables, that by linear movement of the trolleys 15b along the linear guide 10 on the frame 16 it is ensured that the auxiliary end effector 5 is still hung on the ropes 12a-b on both sides (it is important that the ropes 12b are passed upwards in Fig. 19) at all the positions of the auxiliary end effector 5 and that all the ropes 12a-c, but especially the ropes 12b, are under the basic end effector 2 and the tool 3, so that the working area of the tool 3 is completely clear with no interference of the ropes 12a-c. Examples of arrangements of the ropes 12c of the basic movable mechanism 1 are in Fig. 17 or in Fig. 18 or in Fig. 41 and examples of arrangements of the ropes 12a-b of the auxiliary movable mechanism 4 are in Fig. 13 or in Fig. 42. Another possibility is that even the ropes 12a-b of the auxiliary movable mechanism 4 are arranged according to the embodiment in Fig. 17 or in Fig. 41 in the number of 6 or according to Fig. 18 in the number of 8.

In Fig. 20 there is another embodiment of the device according to the invention, which is different from the one in Fig. 19. This embodiment contains two auxiliary movable mechanisms 4a and 4b in serial arrangement upon each other. Between the basic end effector 2 of the basic movable mechanism 1 and the auxiliary end effector 5a of the auxiliary movable mechanism 4a there is the connecting element 6a that represents a member created by a beam resistant to buckling for the possibility of passing the ropes 12c in only one direction (downwards in Fig. 20) and for the possibility of large mobility as at the fixed mechanism HexaSphere (described with a fixed position of the spherical joint 9 in the CZ 302911 document). The connecting element 6a is connected to the basic end effector 2 using a fixed connection 11 and to the auxiliary end effector 5a using the rotational (spherical) joint 9. Between the auxiliary end effector 5a of the movable mechanism 4a and the auxiliary end effector 5b of the movable mechanism 4b there is the connecting element 6b equipped with the actuator 7 for increase of rigidity of the auxiliary end effector 5a. It is increase of rigidity of the auxiliary end effector 5a that increases rigidities of the positions of the connecting elements 6a and enables orientation of the tool 3 in a large scale, which is a great advantage of this embodiment. The connecting element 6b is connected using a fixed connection 11 to the auxiliary end effector 5a as well as to the auxiliary end effector 5b. Furthermore, the trolleys 15 on the linear guides 10 on the frame 16 are used. These enable all the ropes 12, 12c in Fig. 20 to be under the tool 3, so that the working area is completely clear on one side. The ropes 12 are arranged according to Fig. 13 or Fig. 42 for the auxiliary movable mechanisms 4a and 4b and the ropes 12c according to Fig. 17 or Fig. 18 or Fig. 41 for the basic movable mechanism 1.

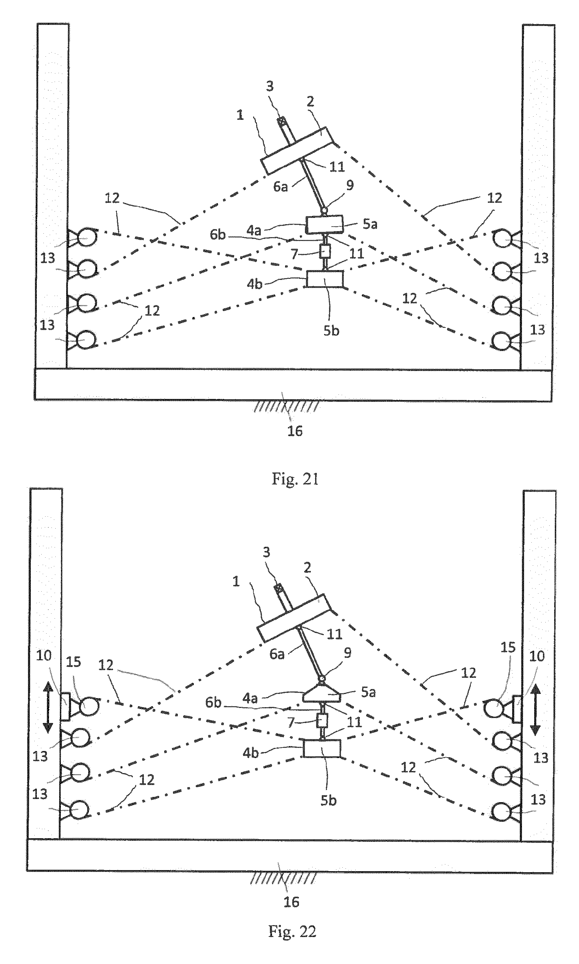

In Fig. 21 there is an alternative embodiment to Fig. 20, where the second auxiliary movable mechanism 4b is used for decreasing the number of the ropes carrying the first auxiliary movable mechanism 4a. By that it is enabled that without using the trolleys 15 on the linear guides 10 on the frame 16 all the ropes 12 are in Fig. 21 under the tool 3 and the working are is completely clear.

In Fig. 22 there is an alternative embodiment to Fig. 21, where the trolleys 15 on the linear guides 10 on the frame 16 are used. In this embodiment, these trolleys still increase the possibility of passing all the ropes 12 under the tool 3, so that the working area can be further enlarged.

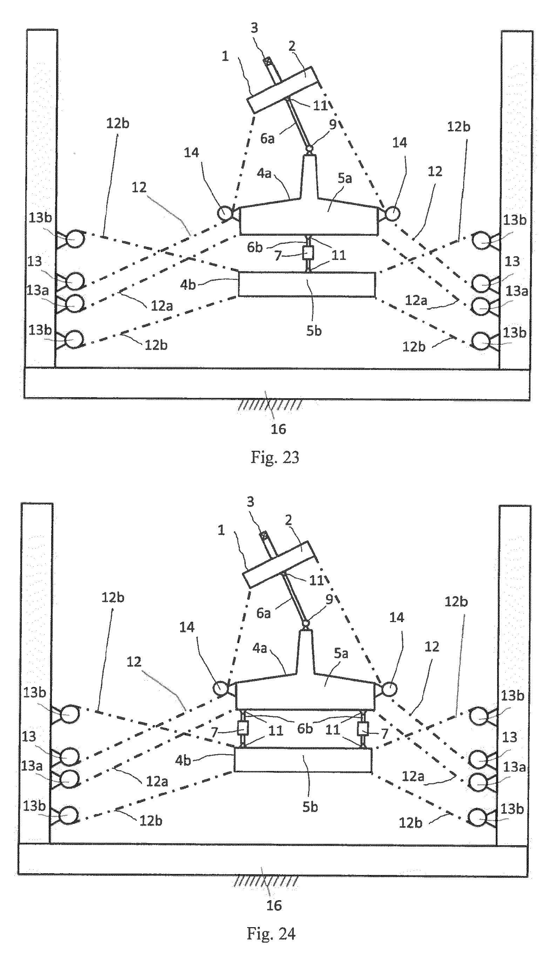

In Fig. 23 there is an alternative embodiment to Fig. 21, where the ropes 12 from the basic end effector 2 are at first passed over the trolleys 14 on the auxiliary movable mechanism 4a to the trolleys 13 on the frame 16. This arrangement enables that the ropes 12 and 12a are passed to the frame 16 in a parallel (collateral) way, so that the danger of their collision is remarkably reduced. The number of the ropes 12 and the ropes 12a is for example 6 for the arrangement according to Fig. 17 or Fig. 41 (6 ropes 12 and 6 ropes 12a) or for example 8 for the arrangement according to Fig. 18 (8 ropes 12 and 8 ropes 12a). The number of the ropes 12b is for example 8 for the arrangement according to Fig. 13 or Fig. 42.

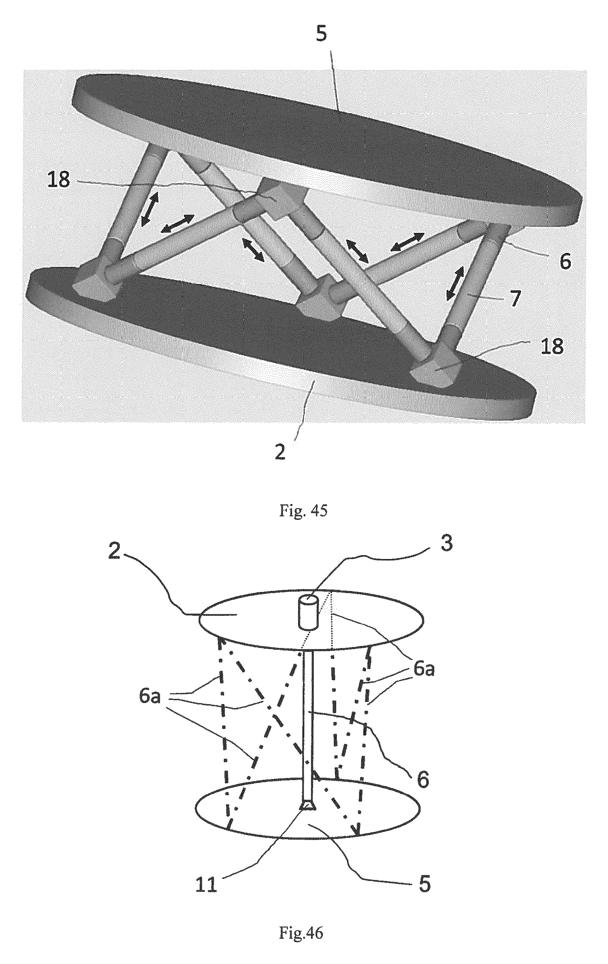

In Fig. 24 there is an alternative embodiment to Fig. 23, where the auxiliary end effectors 5a and 5b are connected using at least two connecting elements 6b with actuators 7. By that the possibility of action of force of the auxiliary movable mechanism 4b on the auxiliary movable mechanism 4a is increased. In a plane it is suitable to use 2 connecting elements 6b and in space 3 (for action of a random force) or 6 (for action of a random force and a momentum) connecting elements 6b. Other suitable arrangements of the connecting elements are in Fig. 45 and in Fig. 46.

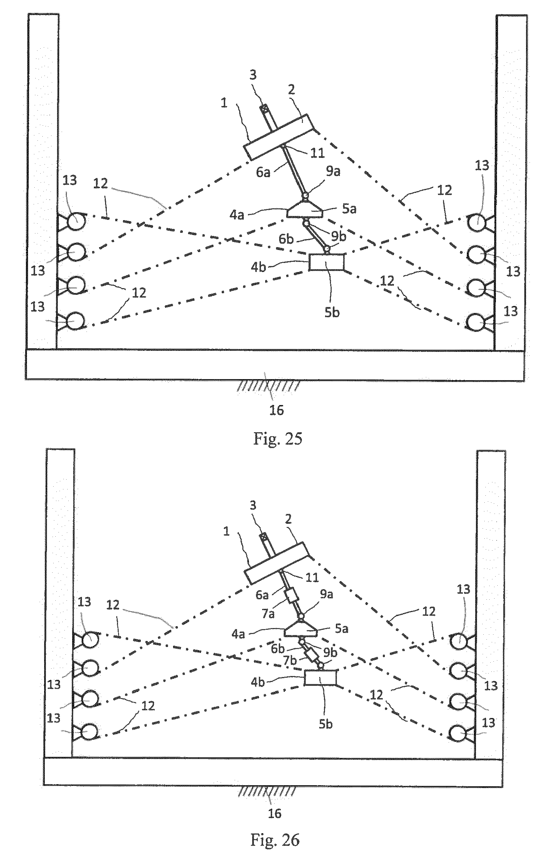

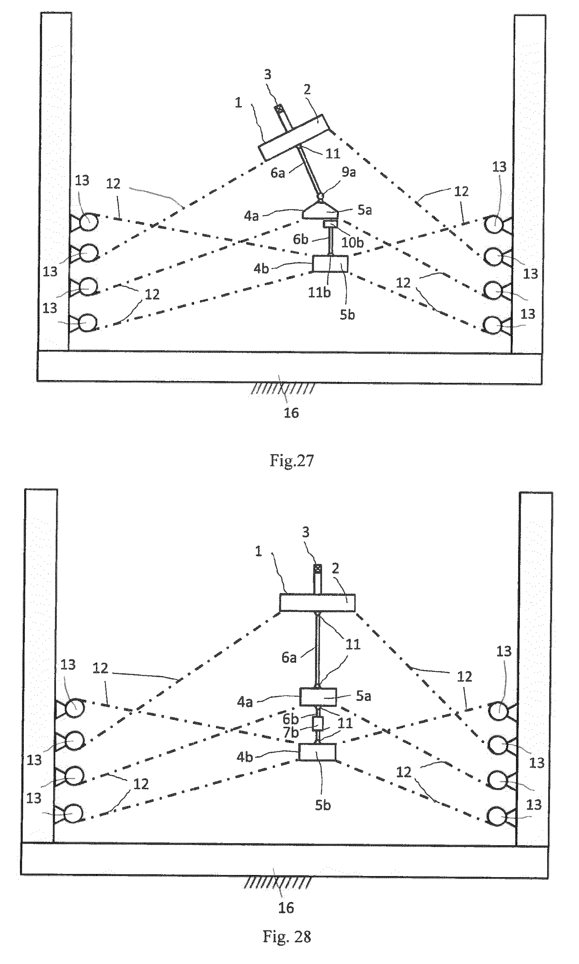

In Fig. 25 to Fig. 27 there are alternative embodiments to Fig. 20, where the roped basic movable mechanism 1 is connected in a serial way using the connecting elements 6a and 6b with two rope auxiliary movable mechanisms 4a and 4b arranged in a serial way upon each other. The difference between the embodiments in Fig. 25 and Fig. 26 and the embodiments in Fig. 20 to Fig. 24 is that the second auxiliary movable mechanism 4b is connected using the connecting element 6b by the rotational joints 9b to the auxiliary end effectors 5a and 5b. The difference between the embodiment in Fig. 27 and the embodiments in Fig. 20 to Fig. 24 is that the second auxiliary movable mechanism 4b is connected using the connecting element 6b by the linear guide 10 to the auxiliary end effector 5a. There are no actuators in the connecting elements 6a and 6b in the embodiment in Fig. 25. There are the actuators 7a and 7b in both the connecting elements 6a and 6b in the embodiment in Fig. 26. The embodiment in Fig. 27 is different, since the connecting element 6b is connected using a fixed connection 11b to the auxiliary end effector 5b and using the linear guide 10b to the auxiliary end effector 5a. This arrangement can be used so that the position of the connecting element 6b can be, with the help of the linear guide 10b, adjusted to the point of intersection of the reaction force of the connecting element 6a and the linear guide 10b and development of additional momentum stressing the connecting element 6b is decreased. Advantageously, even the linear guide 10b would be equipped with an actuator for capture and projection of the reaction force from the connecting element 6a to the linear guide 10b.
According to occurrence of number of the actuators 7 of the connecting element in the relevant connecting elements 6 the method of control of the drives in the mechanism is different. If the actuator 7 of the connecting element is not present, then the whole auxiliary action of force is taken over by the drives of the auxiliary movable mechanisms 4. If the actuators 7 of the connecting element are present, their action of force is used, which is advantageously collocated with disturbing forces and is available in addition to the action of force of the drives of the auxiliary movable mechanisms 4. Control is performed according to the algorithms mentioned above.

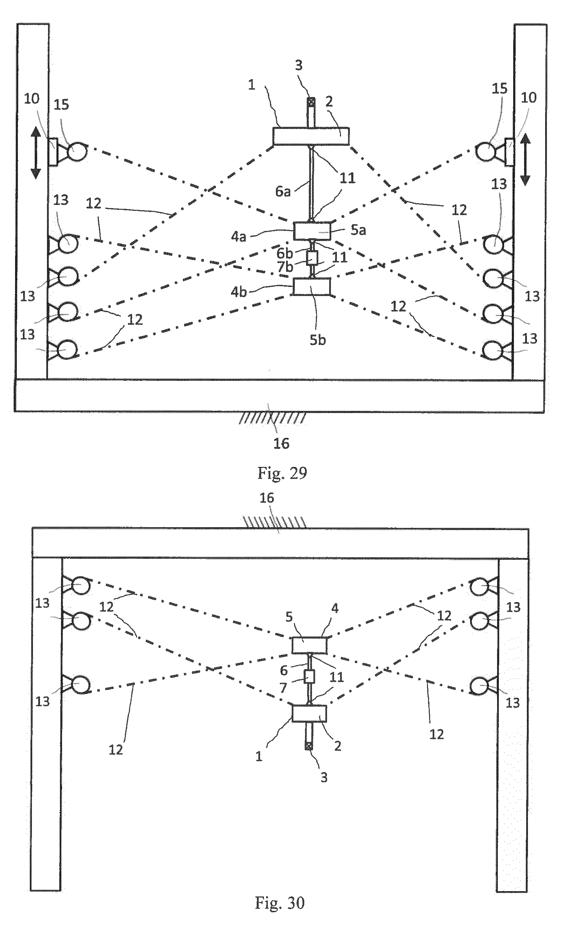

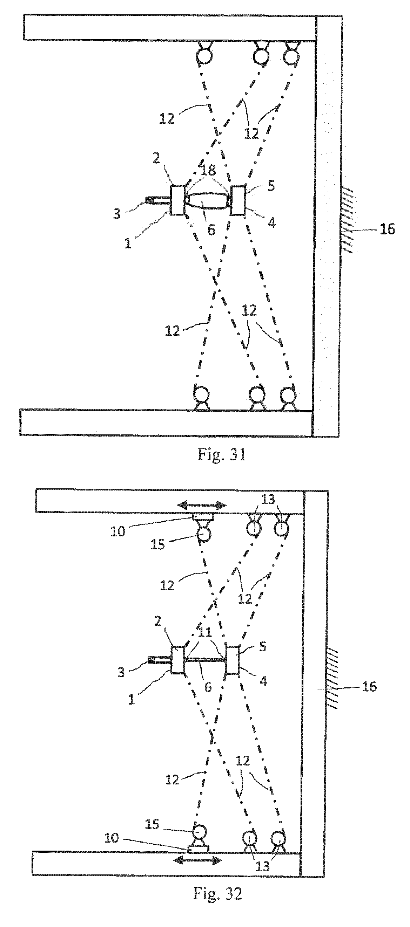

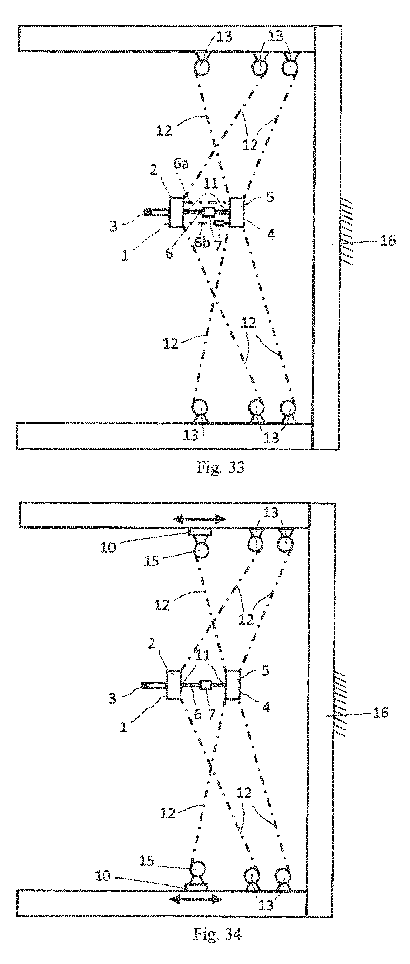

In Fig. 28 to 34 there are depictions of embodiments of roped movable mechanisms for realization of equivalents of horizontal or portal machining machines. In all the cases those can be planar as well as three-dimensional embodiments of the movable mechanism. In the basic embodiments tools of the horizontal or portal machining machines execute only Cartesian linear movements. This is the reason why the connecting elements 6a and 6b in Fig. 28 and Fig. 29 are connected to the end effectors 2, 5a and 5b only using the fixed connections 11, which keep their constant orientation. This is the reason why in Fig. 30 to 34 only the fixed connections 11 are used for fixation of the connecting elements 6 and further only one auxiliary movable mechanism 4. The arrangements in Fig. 28 and Fig. 29 come from the arrangement in Fig. 27 with the basic end effector 2 connected in a serial way to two auxiliary end effectors 5a and 5b and the arrangement of the group of the ropes 12; the arrangements in Figs. 30 to 34 are simplified by using only one auxiliary movable mechanism 4. All the arrangements in Figs. 28 to 34 ensure that the ropes 12 do not interfere into the working area of the tool 3. This working area is then enlarged by the use of the trolleys 15 on the linear guides 10 on the frame 16 instead of the trolleys 13.
For example, the working area in Fig. 29 is enlarged in comparison with the working area in Fig. 28 by using the trolleys 15 on the linear guides 10 on the frame 16. Analogically, the working area is enlarged in the embodiment in Fig. 32 in comparison with the embodiment in Fig. 31 and in Fig. 34 in comparison with the embodiment in Fig. 33.
The arrangement in Fig. 30 is then a complete roped equivalent of a portal machining machine. There is only one auxiliary end effector 5 in the embodiment in Fig. 30 since it considers support of rigidity only for Cartesian linear movements. The working area of the tool 3 could be still enlarged by using the trolleys 15 on the linear guide instead of the trolleys 13. The connecting element 6 is equipped with the actuator 7 for increasing the rigidity of the basic movable mechanism 1.
The embodiments in Figs. 31 to 34 are created from the embodiment in Fig. 30 by turning by 90 degrees and by small modifications; from an equivalent of a portal machining machine an equivalent of a horizontal machining machine is created.
The embodiments in Fig. 31 further show possible utilization of an inflated or a deflated arm for the connecting element 6 that is, in this case, connected to the basic 2 and the auxiliary 5 end effector using the flexible joints 18 instead of the fixed connections 11. The advantage is decrease of weight of the connecting element 6.
In the embodiment in Fig. 32, compared to the embodiment in Fig. 31, there are the trolleys 15 on the linear guides 10 on the frame 16 used for enlargement of the working area of the tool 3 but the actuator 7 of the connecting element 6 is not used.
In the embodiment in Fig. 33 there is further shown a possibility of utilization of the ropes for the connecting element 6. The basic end effector 2 carrying the tool 3 is connected to the auxiliary end effector 5 using the connecting element 6 that is created by an element resistant to buckling and equipped with the actuator 7 and is further connected using the connecting elements 6a and 6b that are created by ropes. Furthermore, the rope of the connecting element 6b is equipped with the actuator 7. This actuator can be a piezoactuator. Another possibility of arrangement of the actuator 7 for the rope of the connecting element 6b would be utilization of driven trolleys on the auxiliary movable mechanism 4 (see the driven trolley 17 in Fig. 39). Another advantageous arrangement of this rope connection of the basic 2 and the auxiliary 5 end effectors is in Fig. 46. The advantage of usage of ropes is decrease of weight and increase of the rigidity to weight ratio.
In the embodiment in Fig. 34, compared to the embodiment in Fig. 33, there is the trolley 15 on the linear guides 10 on the frame 16 used for enlargement of the working area of the tool 3 and the actuator 7 of the connecting element is used as well.
Control is performed according to the algorithms mentioned above.

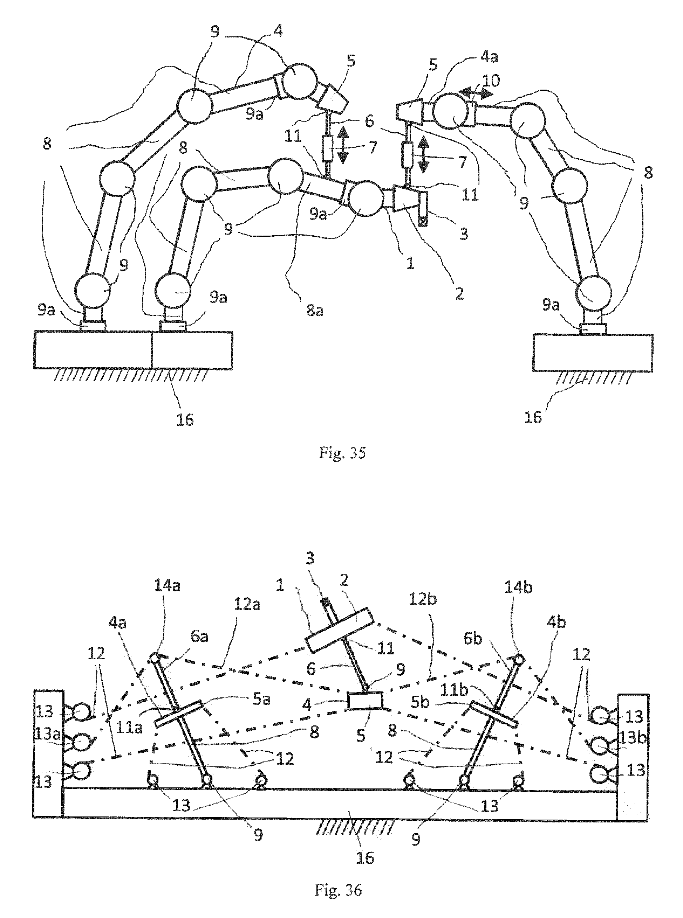

In Fig. 35 there is an alternative embodiment to the embodiments in Figs. 10 and 20, where more auxiliary movable mechanisms 4 are used. Two auxiliary movable mechanisms 4 are used, one of which acts on the basic end effector 2 of the basic movable mechanism 1 using the connecting element 6 equipped with the actuator 7 of the connecting element and the second one acts on the arm 8 of the basic movable mechanism 1 using the connecting element 6 which is equipped with the actuator 7 of the connecting element as well. In this example all the movable mechanisms 1 and 4 are created by the fixed arms 8. The auxiliary movable mechanism 4a is different from the auxiliary movable mechanism 4 as well, since there is the linear guide 10 equipped with a drive, e.g. a telescopic screw, used in the structure of the auxiliary movable mechanism 4a This can be a planar as well as a three-dimensional embodiment of the movable mechanism.

In Fig. 36 there is another alternative embodiment to the embodiments in Fig. 10 and 20, where more auxiliary movable mechanisms 4 were used, some of which, 4a and 4b, act using the connecting element 6a and 6b on the arms of the auxiliary movable mechanism 4 that are in this case created by the ropes 12a and 12b which are passed from the auxiliary end effector 5 to the frame over the trolleys 14a and 14b which are positioned on the connecting element 6a, 6b of the auxiliary movable mechanism 4a, 4b. The basis is the embodiment shown in Fig. 16. For enlargement of the working area of the tool 3, instead of the solution shown in Fig. 19 with the trolleys 15 on the linear guide, there are two auxiliary movable mechanisms 4a and 4b with special arrangement used. The auxiliary movable mechanisms 4a, 4b are created by the arm 8 connected to the frame 16 through the rotational (spherical) joint 9 and the ropes 12 passed from the auxiliary end effectors 5a, 5b to the trolleys 13 on the frame 16. The auxiliary end effectors 5a. 5b are connected using the connecting elements 6a, 6b to the ropes 12a, 12b that represent equivalents to the fixed arms 8. The connecting elements 6a, 6b are connected to the auxiliary end effector using the fixed connections 11a, 11b and to the ropes 12a, 12b using the trolleys 14a, 14b. This arrangement creates a clear working area of the tool 3 with no interference of the ropes 12. This can be a planar as well as a three-dimensional embodiment of the movable mechanism.

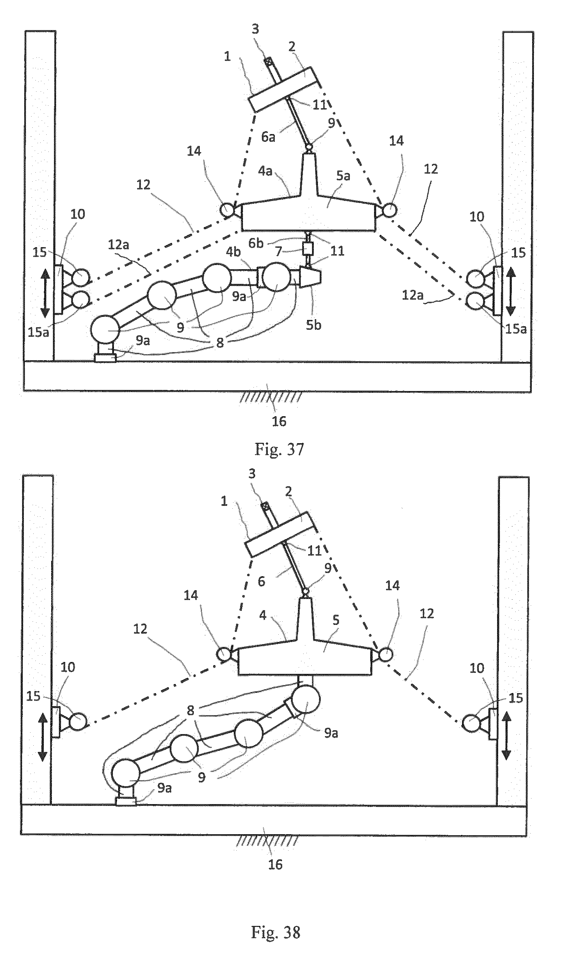

In Figs. 37 to 39 there are examples of embodiments of combinations of a roped mechanism for the basic movable mechanism 1 and a traditional mechanism with fixed arms for the auxiliary movable mechanism 4. By this combination a clear working area of the tool 3 without interference of the ropes 12 can be achieved more easily and in a larger scale. In all the cases those can be planar as well as three-dimensiona, embodiments of the movable mechanism. Control is performed according to the algorithms mentioned above.

In Fig. 37 there is an alternative to the embodiment in Fig. 23, where the second auxiliary movable mechanism 4b is replaced with the traditional mechanism 4b with the fixed arms 8. In this embodiment utilization of a pair of the trolleys 15 on a common linear guide 10 on the frame 16, which enlarges the working area of the tool 3, is especially advantageous. The ropes 12 and 12a can be arranged according to the Fig. 41. Advantageously, number of the connecting elements 6b equipped with the actuators 7 can be increased, analogically to the embodiment in Fig. 24.

In Fig. 38 there is another alternative to the embodiment in Fig. 23, where the second auxiliary movable mechanism 4b is omitted and the auxiliary movable mechanism 4a is replaced with the traditional mechanism 4 with the fixed arms 8. In this embodiment utilization of the trolleys 15 on the linear guide 10 on the frame 16, which enlarges the working area of the tool 3, is advantageous. The ropes 12 can be arranged according to Fig. 41.

In Fig. 39 there is an alternative to the embodiment in Fig. 38, where the ropes 12 of the basic movable mechanism 1 are not passed to the frame 16, but only to the driven trolleys 17 on the auxiliary end effector 5 on the auxiliary movable mechanism 4. By this a complete removal of interference of the ropes 12 into the working area 3 occurs. Disadvantage is larger weight of the auxiliary movable mechanism with the fixed arms in comparison with the roped auxiliary movable mechanism. The ropes 12 can be arranged according to Fig. 41.

In Fig. 40 there are schematic depictions of methods of drives of the ropes 12. The ropes 12, represented e.g. by the ropes 12a, can be passed to the trolleys 13a and through them to the carts on the linear guide 10 equipped with a drive on the frame (an endless screw or a linear electric motor). The advantage is that there are no problems with winding the ropes on a drum. Another method is that for example the ropes 12b depicted here can be passed to the trolleys 15b on the linear guide 10b equipped with the linear drive and through those to the carts on the linear guide 10b equipped with a linear drive on the frame.
Beside elimination of the problems with winding the ropes on the drum, the advantage is that the position of the trolley 15 is changeable and adjustable for suitable passing of the rope 12b from the frame.

Another method is that for example the ropes 12c depicted here are passed to the trolleys 13c equipped with a rotational drive on which the ropes 12c are wound on the drum.

The advantage is that the space that is needed for the drive of the rope is small. Finally, another method is that for example the ropes 12d depicted here are passed to the trolleys 15d equipped with the rotational drive on which the ropes 12d are wound on the drum and are positioned on the linear guide 10d equipped with the linear drive on the frame. The advantage is a small space that is needed for the drive of the rope and adjustment of the position of the trolley 15d for suitable passing of the rope 12d from the frame. The drives of the ropes 12 are depicted on the frame 16 in this embodiment, but analogically the ropes 12 can be driven on the auxiliary movable mechanism 4 through the trolleys 17. All the trolleys with the drives in all the examples of the embodiments are realized according to some of the schematic depictions in Fig. 40. However, those embodiments, except of Fig. 40, are not depicted with these details.

In Figs. 41 and 42 there are alternative arrangements of the ropes to the depictions in Figs. 17 and Fig. 13 in the configuration of the Hexapod and Octapod types, so that the problem of collision of the ropes 12a-c is minimized.

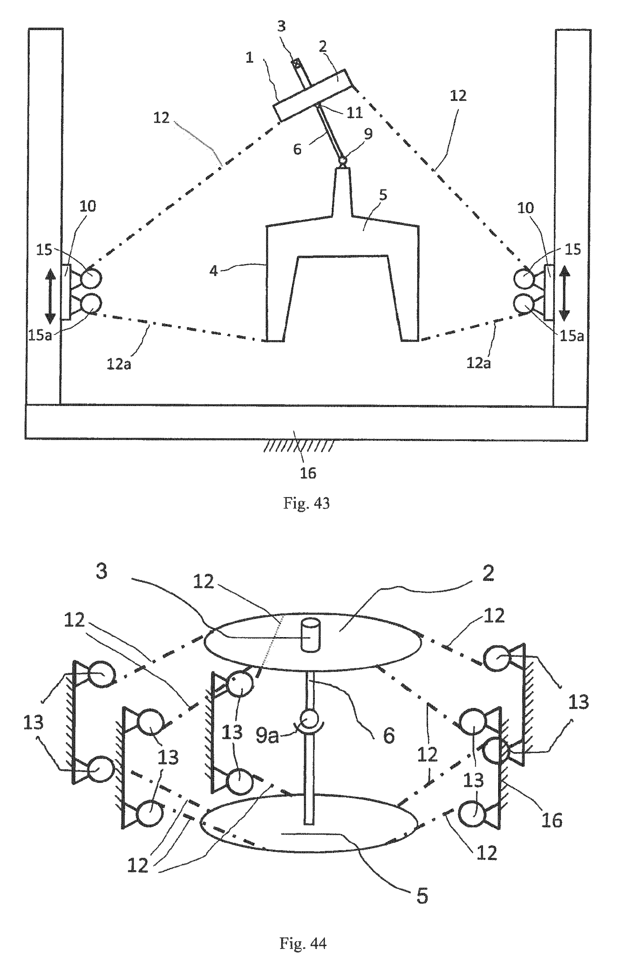

In. Fig. 43 there is another alternative embodiment to the embodiment in Fig 19, where the constructional height of the auxiliary end effector 5 and the pair of the trolleys 15, 15a on the common linear guide 10 on the frame 16 are used to ensure different direction of the ropes 12 and 12a. This enables that the working area of the tool 3 is clear with no interferences of the ropes in the large working area. This can be a planar as well as a three-dimensional embodiment of the movable mechanism. In the three-dimensional embodiment number of the ropes can be different, for example 10 ropes according to the embodiment in Fig. 44 or 12 ropes according to the embodiment in Fig. 17 or in Fig. 41 or 16 ropes according to the embodiment in Fig. 18.

In Fig. 44 there is a schematic depiction of a three-dimensional embodiment from Fig. 43, where no trolleys 15 on the linear guide are used, but only the trolleys 13 on the frame 16 are used. 10 ropes 12 are used, which is advantageous, since the number of the ropes needed is reduced. For sufficient redundancy of the drives it is advantageous to use the rotational joint 9a with two degrees of freedom (a cardan joint).

In Fig. 45 there is another three-dimensional embodiment of connection of the basic end effector 2 and the auxiliary end effector 5 using more connecting elements 6. In this embodiment 6 connecting elements 6 aligned in a parallel way in the Hexapod configuration are used. The connecting elements 6 are equipped with the actuators 7 (e.g. piezoactuators or linear electric motors "motor on motor") and are connected to the basic 2 as well as to the auxiliary 5 end effector using the flexible joints 18. The advantage is action of force and momentum of the auxiliary end effector 5 on the basic end effector 2 with completely no clearance. This embodiment can be used also for connection between the auxiliary end effectors 5a and 5b, for example in the embodiment in Fig. 29 or Fig. 37.

In Fig. 46 there is another three-dimensional embodiment of connection of the basic end effector 2 and the auxiliary end effector 5 using more connecting elements 6. At this embodiment one connecting element 6 as a member resistant to buckling and 6 ropes 6a aligned in a parallel way in the Hexapod configuration are used. At this embodiment the ropes 6a are not equipped with the actuators 7 as they are in Fig. 33. The advantage is a light and rigid connection of the basic end effector 2 and the auxiliary end effector 5 using the connecting elements 6. Alternatively, the ropes 6a can be equipped with the actuators 7. This embodiment can be used also for connection between the auxiliary end effectors 5a and 5b, for example in the embodiment in Fig. 29 or Fig. 37.

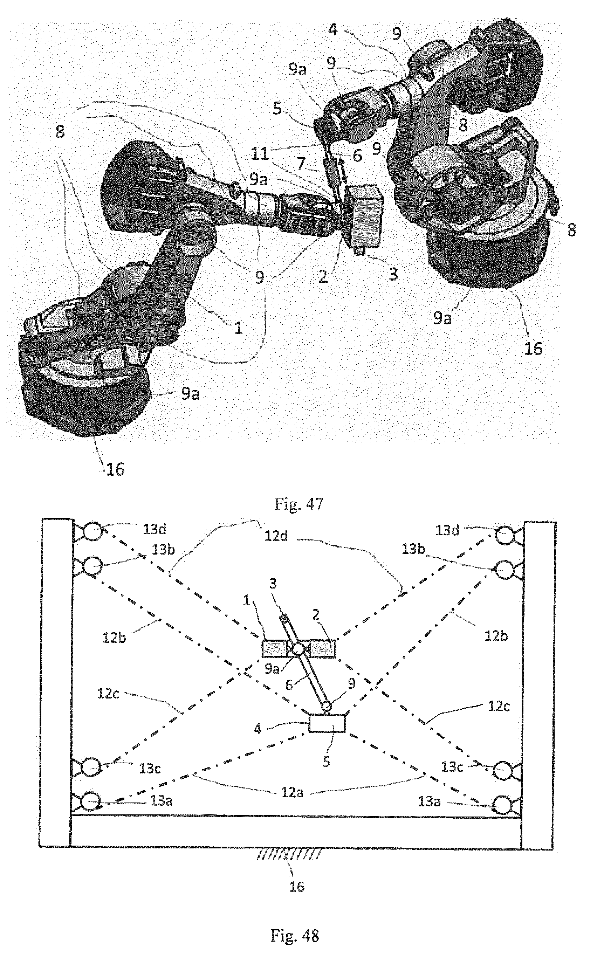

In Fig. 47 there is a three-dimensional embodiment according to Fig. 4. The basic movable mechanism 1 represented by an industrial robot carrying a tool 3 is connected using the connecting element 6 with the actuator 7 to the auxiliary movable mechanism 4 represented by an industrial robot.

In Fig. 48 there is a schematic depiction of another alternative to the basic embodiment in Fig. 11. The tool 3 is movable towards the basic end effector 2, so that it is attached to the basic end effector 2 using the rotational (spherical) joint 9a and is connected with the connecting element 6 using a fixed connection. The connecting element 6 is connected to the auxiliary end effector 5 using the rotational (spherical) joint 9. This embodiment enables influencing the movement of the tool 3 by the movement of the auxiliary end effector 5.

In the embodiments mentioned above there are advantageously used parallel kinematic structures with more drives than degrees of freedom. In the case of roped mechanisms it is suitable to use more drives than degrees of freedom, at least two more.
All the embodiments mentioned above can be further combined arbitrarily.
Control of the movement of the industrial robots and/or the machining machines is carried out by a computer.

## Claims

1. The method of change of rigidity of a serial or parallel basic movable mechanism fixed to a frame and carrying a tool fixed to a basic end effector, especially an industrial robot and/or a machining machine, featured by the fact that at least one auxiliary movable mechanism fixed to a frame and equipped with an auxiliary end effector is created, the basic end effector and the auxiliary end effector are connected using at least one connecting element, the position of the tool, which is connected to the basic end effector, is determined and according to the deviation of the position of the tool connected to the basic end effector from the required position the action of force, which is needed to act on the basic end effector of the basic movable mechanism with the help of the connecting element for achievement of the required position of the tool, is determined.

2. The method of change of rigidity of a serial or parallel basic movable mechanism according to the Claim 1, featured by the fact that for determination of deviation of the position of the tool fixed to the basic end effector the position of drives of the basic and/or an auxiliary movable mechanism and/or movement in the joints of the basic and/or an auxiliary movable mechanism and/or deformations of the arms of the basic and/or an auxiliary movable mechanism and/or deformation of a connecting element are measured and/or the position of the connecting points of the connecting element on the basic and/or an auxiliary end effector towards the basic and/or an auxiliary end effector and/or towards the frame is measured and/or the position of the tool fixed to the basic end effector towards the frame is measured.

3. The device for change of rigidity of a serial or parallel basic movable mechanism fixed to a frame and carrying a tool fixed to a basic end effector, especially an industrial robot and/or a machining machine, featured by the fact that the basic end effector (2) or the arm (8) of the basic movable mechanism (1) is connected using at least one connecting element (6) with at least one auxiliary end effector (4) of a serial or parallel auxiliary movable mechanism (4) fixed to the frame (16).

4. The device for change of rigidity of a serial or a parallel movable mechanism according to the Claim 3, featured by the fact that the basic movable mechanism (1) and/or the auxiliary movable mechanism (4) is serial and/or parallel, with fixed and/or inflated and/or deflated and/or roped arms.

5. The device for change of rigidity of a serial or a parallel movable mechanism according to some of the above mentioned Claims, featured by the fact that the connecting element (6) is connected to the basic end effector (2) and/or the auxiliary end effector (5) using the rotational joint (9) and/or in a sliding way (10) and/or in a fixed way (11) and/or using a flexible joint (18).

6. The device for change of rigidity of a serial or parallel movable mechanism according to some of the above mentioned Claims, featured by the fact that it is equipped with sensors of the position of the connecting points of the connecting element (6) and/or with sensors of movement in the joints (9, 18) and/or with sensors of movement in the linear guides (10) and/or with sensors of movement in the trolleys (13, 14, 15, 17) and/or with sensors of deformation of the arms (8) and/or with sensors of deformation of the ropes (12) and/or with sensors of deformation of the connecting element (6) and/or with sensors of the position of the tool (3).

7. The device for change of rigidity of a serial or a parallel movable mechanism according to some of the above mentioned Claims, featured by the fact that the basic movable mechanism (1) and/or the auxiliary movable mechanism (4) has more drives than degrees of freedom.

8. The device for change of rigidity of a serial or parallel movable mechanism according to some of the above mentioned Claims, featured by the fact that the connecting element (6) is equipped with the actuator (7) of a controlled source of power and/or of controlled damping.

9. The device for change of rigidity of a serial or parallel movable mechanism according to some of the above mentioned Claims, featured by the fact that the auxiliary end effector (5) and/or a part of the auxiliary movable mechanism (4) is passed parallel to the basic end effector (2) and/or to a part of the basic movable mechanism (1).

10. The device for change of rigidity of a serial or parallel movable mechanism according to some of the above mentioned Claims, featured by the fact that the connecting element (6) is fixed and/or deflated and/or inflated and/or roped.

11. The device for change of rigidity of a serial or parallel movable mechanism according to some of the above mentioned Claims, featured by the fact that the arms of the basic movable mechanism (1) and/or of the auxiliary movable mechanism (4) are represented by the ropes (12) connected with drive trolleys (13) and/or the linear drive trolleys (15) on the frame (16) and/or the drive trolleys (17) on the auxiliary movable mechanism (4).

12. The device for change of rigidity of a serial or parallel movable mechanism according to some of the above mentioned Claims, featured by the fact that the ropes (12) between the basic movable mechanism (1) and/or the auxiliary movable mechanism (4) and the frame (16) are passed over the trolleys (14) on the auxiliary movable mechanism (4).

13. The device for change of rigidity of a serial or parallel movable mechanism according to some of the above mentioned Claims, featured by the fact that the trolleys (13, 14, 15, 17) are equipped with sensors of movement.

14. The device for change of rigidity of a serial or parallel movable mechanism according to some of the above mentioned Claims, featured by the fact that the ropes (12a, 12b) between the basic movable mechanism (1) and/or the auxiliary movable mechanism (4) and the frame (16) are passed over the trolleys (14a, 14b) on the connecting elements (6a, 6b) of the auxiliary movable mechanism (4a, 4b).

15. The device for change of rigidity of a serial or parallel movable mechanism according to some of the above mentioned Claims, featured by the fact that the ropes (12c, 12d) are connected to the perimeter of the basic movable mechanism (1) and/or of the auxiliary movable mechanism (4) in a tangent way with a counter action of force on the basic movable mechanism (1) and/or the auxiliary movable mechanism (4).

16. The device for change of rigidity of a serial or parallel movable mechanism according to some of the above mentioned Claims, featured by the fact that the ropes (12) of the basic movable mechanism (1) and/or the auxiliary movable mechanism (4) are passed outside the working area of the tool (3).

17. The device for change of rigidity of a serial or parallel movable mechanism according to some of the above mentioned Claims, featured by the fact that the tool (3) is movable towards the basic end effector (2) and is connected with the connecting element (6).
